# EUROPEAN PATENT APPLICATION

(11) **EP 4 407 851 A1**
(43) Date of publication of application: **31.07.2024**
(21) Application number: 23153894.3
(22) Date of filing: 30.01.2023
(51) Int. Cl.: H02M 1/00, H02M 1/32, H02M 3/155

(54) **OVERCURRENT PROTECTION METHOD AND DEVICE**

(71) Applicant: Infineon Technologies Austria AG, 9500 Villach (AT)
(72) Inventor: GROIß, Stefan Hermann, 9523 Landskron (AT)
(74) Representative: Infineon Patent Department

(57) **Abstract**

The present document relates to overcurrent protection methods and devices. In particular, the present document relates to overcurrent protection methods and devices for gate drivers which are receiving short pulse width modulation (PWM) pulses. In particular, a method of detecting an overcurrent in a switched mode power supply comprising a high side switching element and a low side switching element is described. The method may comprise sensing, in a first mode of operation, during a first sensing time interval when the low side switching element is turned on, a first current indicative of a load current. The method may comprise detecting an overcurrent condition if the first current exceeds a first threshold value.

## Description

### Technical Field

The present document relates to overcurrent protection methods and devices. In particular, the present document relates to overcurrent protection methods and devices for gate drivers which are receiving short pulse width modulation (PWM) pulses.

### Background

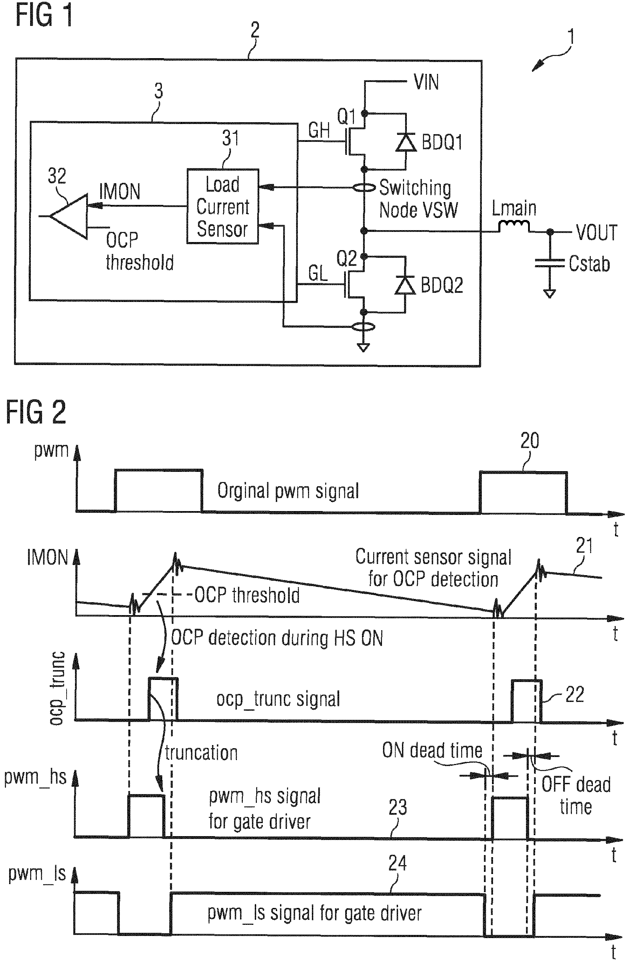

In switched mode power supplies (SMPS), a state-of-the-art fault protection is protection against load overcurrent. If a short at the load or somewhere else in the system happens during operation or even exists at the beginning of operation, the load current can increase nearly unlimited and therefore the system must be protected against such an event. Otherwise, uncontrolled temperature increase and overvoltage stress with or without destruction of the system may be a consequence. In Fig. 1, a half bridge comprising transistors Q1 and Q2 and an inductor Lmain is shown as an example for a SMPS. Such a SMPS can be operated as buck converter, and the output voltage Vout may be smaller than the input voltage Vin. In addition, in the field of smart power stage (e.g. for multiphase power supply systems like in server applications) the currents through transistors Q1 and Q1 may be sensed and used by a power stage controller for proper loop regulation.

### Summary

According to an aspect, a method of detecting an overcurrent in a switched mode power supply comprising a high side switching element and a low side switching element is described. The method may comprise sensing, in a first mode of operation, during a first sensing time interval when the low side switching element is turned on, a first current indicative of a load current. The method may comprise detecting an overcurrent condition if the first current exceeds a first threshold value.

The switching elements may be implemented with any suitable devices, such as, for example, metal-oxide-semiconductor field effect transistors MOSFETs, insulated-gate bipolar transistors IGBTs, MOS-gated thyristors, or any other suitable power devices. For instance, the switching elements may be implemented using III-V semiconductors such as e.g. GaN- high-electron-mobility transistors HEMTs. Each switching element may have a gate to which a respective driving voltage or control signal may be applied to turn the switching element on (i.e. to close the switching element) or to turn the switching element off (i.e. to open the switching element).

In particular, in the first mode of operation, the first current may be sensed only during the first sensing time interval and not during a time interval during which the high side switching element is turned on.

The current indicative of the load current may be sensed by directly sensing the load current or by indirectly sensing the load current via one or more current mirror circuits and/or via a replica current generation circuit configured to generate a scaled (i.e. proportional) version of the load current.

The method may comprise sensing, in a second mode of operation, during a second sensing time interval when the high side switching element is turned on, a second current indicative of the load current. The method may comprise detecting an overcurrent condition if the second current exceeds a second threshold value.

For example, the first threshold value may be equal to the second threshold value. Moreover, in the second mode of operation, the second current may be sensed only during the second sensing time interval and not during a time interval during which the low side switching element is turned on.

The method may comprise receiving a pulse width modulation PWM signal for controlling the switching behavior of the high side switching element and the low side switching element. The method may comprise switching between the first mode of operation and the second mode of operation based on the PWM signal.

The PWM signal may be a binary signal which may be in a logic high value or a logic low value. For example, the logic high value may indicate that the high side switching element has to be turned on, and the logic low value may indicate that the low side switching element has to be turned on. In other words, the PWM signal may be regarded as a sequence of pulses, wherein each pulse is characterized by a time interval during which the PWM signal has its logic high value. The PWM signal may be provided by an external controller.

The PWM signal may comprise a control pulse for turning on the high side switching element. The method may comprise switching between the first mode of operation and the second mode of operation based on a duration of the control pulse. More specifically, the method may comprise switching to the first mode of operation if a duration of the control pulse is shorter than a threshold duration. The method may comprise switching to the second mode of operation if the duration of the control pulse is longer than the threshold duration.

The method may comprise generating a threshold pulse with a duration corresponding to the threshold duration. The method may comprise comparing the threshold pulse with the control pulse using a latch. The method may comprise switching between the first mode of operation and the second mode of operation based on an output of the latch.

The first sensing time interval may begin after a first blanking time interval expires after the low side switching element is turned on. For example, the first blanking time interval may be determined using analog (e.g. RC based) delay elements or digital timers.

Similarly, the second sensing time interval may begin after a second blanking time interval expires after the high side switching element is turned on. Again, the second blanking time interval may be determined using analog (e.g. RC based) delay elements or digital timers.

The high side switching element and the low side switching element may be connected in series between an input terminal and a reference potential. More specifically, the high side switching element may be coupled between the input terminal and a switching node, and the low side switching element may be coupled between the switching node and the reference potential. An inductor may be coupled between the switching node and an output terminal. An output capacitor may be coupled between the output terminal and the reference potential.

Throughout this document, the term "reference potential" is meant in its broadest possible sense. In particular, the reference potential is not limited to ground i.e. a reference potential with a direct physical connection to earth or a voltage of 0V. Rather, the term "reference potential" may refer to any reference point to which and from which electrical currents may flow or from which voltages may be measured. Moreover, it should be mentioned that the reference potentials mentioned in this document may not necessarily refer to the same physical contact. Instead, the reference potentials mentioned in this document may relate to different physical contacts although reference is made to "the" reference potential for ease of presentation.

During the first sensing time interval, the load current may flow through the low side switching element. In particular, during the first sensing time interval, the load current may be flowing through the low side switching element via an inductive element to an output of the switched mode power supply. The load current may decrease during the first sensing time interval. For instance, the load current may be continuously decreasing during the entire first sensing time interval.

The method may comprise reducing, when the overcurrent condition is detected in the first mode of operation, a duration of a subsequent control pulse following the control pulse of the PWM signal. The method may comprise applying the subsequent control pulse with reduced duration to a gate of the high side switching element. For example, the duration of the subsequent control pulse may be reduced to a minimum value or may be even set to 0 to entirely skip the subsequent control pulse. In this way, energy transport and heat generation within the SMPS may be reduced.

The method may comprise turning off, when the overcurrent condition is detected in the second mode of operation, the high side switching element. The method may comprise turning on, when the overcurrent condition is detected in the second mode of operation, the low side switching element.

According to another aspect, a power stage is presented. The power stage may comprise functional features which correspond to the method steps described in the present document. More specifically, the power converter may comprise a high side switching element, a low side switching element, and an overcurrent protection circuit with a current sensor configured to sense, in a first mode of operation, during a first sensing time interval when the low side switching element is turned on, a first current indicative of a load current. The overcurrent protection circuit may be configured to detect an overcurrent condition if the first current exceeds a first threshold value.

The overcurrent protection circuit may comprise a comparator circuit configured to compare an output of the current sensor with the first threshold value for detecting the overcurrent condition.

The current sensor may be configured to sense, in a second mode of operation, during a second sensing time interval when the high side switching element is turned on, a second current indicative of the load current. The overcurrent protection circuit may be configured to detect an overcurrent condition if the second current exceeds a second threshold value.

The overcurrent protection circuit may be configured to receive a pulse width modulation PWM signal for controlling the switching behavior of the high side switching element and the low side switching element. The overcurrent protection circuit may be configured to switch between the first mode of operation and the second mode of operation based on the PWM signal. To be more specific, the over current protection circuit may be configured to switch between the first mode of operation and the second mode of operation based on a duration of the control pulse.

The PWM signal may comprise a control pulse for turning on the high side switching element, and the overcurrent protection circuit may be configured to switch to the first mode of operation if a duration of the control pulse is shorter than a threshold duration. The overcurrent protection circuit may be configured to switch to the second mode of operation if the duration of the control pulse is longer than the threshold duration.

The overcurrent protection circuit may be configured to generate a threshold pulse with a duration corresponding to the threshold duration. The overcurrent protection circuit may be configured to compare the threshold pulse with the control pulse using a latch. The overcurrent protection circuit may be configured to switch between the first mode of operation and the second mode of operation based on an output of the latch.

The first sensing time interval may begin after a first blanking time interval expires after the low side switching element is turned on. The second sensing time interval may begin after a second blanking time interval expires after the high side switching element is turned on.

The high side switching element and the low side switching element may be connected in series between an input terminal and a reference potential. In other words, the high side switching element and the low side switching element may form a half-bridge. The overcurrent protection circuit may be regarded as part of the driver circuitry configured to drive the high side switching element and the low side switching element. Said driver circuitry may be configured to receive the PWM signal and to generate drive signals for the gates of the high side switching element and the low side switching element based on the PWM signal and based on the output of the overcurrent protection circuit.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

In the present document, the term "couple" or "coupled" refers to elements being in electrical communication with each other, whether directly connected e.g., via wires, or in some other manner.

### Short description of the Figures

The present invention is illustrated by way of example, and not by way of limitation, in the figures of the accompanying drawings in which like reference numerals refer to similar or identical elements, and in which
Fig. 1 shows an exemplary circuit diagram of a switched-mode power supply with an overcurrent protection circuit;
Fig. 2 shows exemplary signal waveforms during the second mode of operation of the overcurrent protection circuit;
Fig. 3 shows other exemplary signal waveforms during the second mode of operation of the overcurrent protection circuit; and
Fig. 4 shows exemplary signal waveforms during the first mode of operation of the overcurrent protection circuit.

### Detailed Description

Fig. 1 shows an exemplary switched-mode power supply 1 comprising a power stage 2, an inductor Lmain coupled between the switching node of the power stage 2 and the output of the switched-mode power supply 1, and an output capacitor Cstab coupled between the output of the switched-mode power supply 1 and a reference potential. As illustrated in Fig. 1, the power stage 2 comprises a high side switching element Q1 and a low side switching element Q2, which are driven by gate signals GH and GL, respectively, and which comprise body diodes BDQ1 and BDQ2, respectively. Furthermore, the power stage 2 comprises an overcurrent protection circuit 3 with a current sensor 31 and a comparator 32. It's the duty of the comparator 32 to compare the sensed current IMON generated by the current sensor 31 with an OCP threshold for detecting an overcurrent condition. Typically, the positive load current flow is going towards Vout. In most of the cases, the load current is flowing in positive direction so that energy is transported to the load.

Fig. 2 shows exemplary signal waveforms during what is denoted as "a second mode of operation" of the overcurrent protection circuit 3 throughout this document. Normally, a SMPS is controlled by a PWM signal determined by a system controller from outside. This signal is shown as PWM signal 20 in Fig. 2. By additional circuitries not shown in Fig. 1, the driving signals for Q1 and Q2 are derived from the PWM signal 20 which result in pwm_hs (shown as signal 23) and pwm_ls (shown as signal 24). The signals pwm_hs and pwm_ls are nonoverlapping driving signals for driving the gates of Q1 and Q2. The dead times between those signals avoid that Q1 and Q2 are switched on the same time what can lead to a shoot through and a total damage of the system. The load current sensor in the driver system, is sensing continuously the load current and generates IMON signal (shown as signal 21) which is proportional to the load current. As soon as the over current protection (OCP) threshold is hit from the IMON signal during Q1 on phase, which can be detected by comparator 32, ocp_trunc signal (shown as signal 22) is generated. This ocp_trunc signal can be used for performing a pulse truncation. This means Q1 is switched off earlier than controlled by pwm signal and Q2 is switched on earlier. By this limitation in time of pwm_hs signal, the energy transport to the load is reduced and therefore also the load current is reduced until the desired limit of load current is reached.

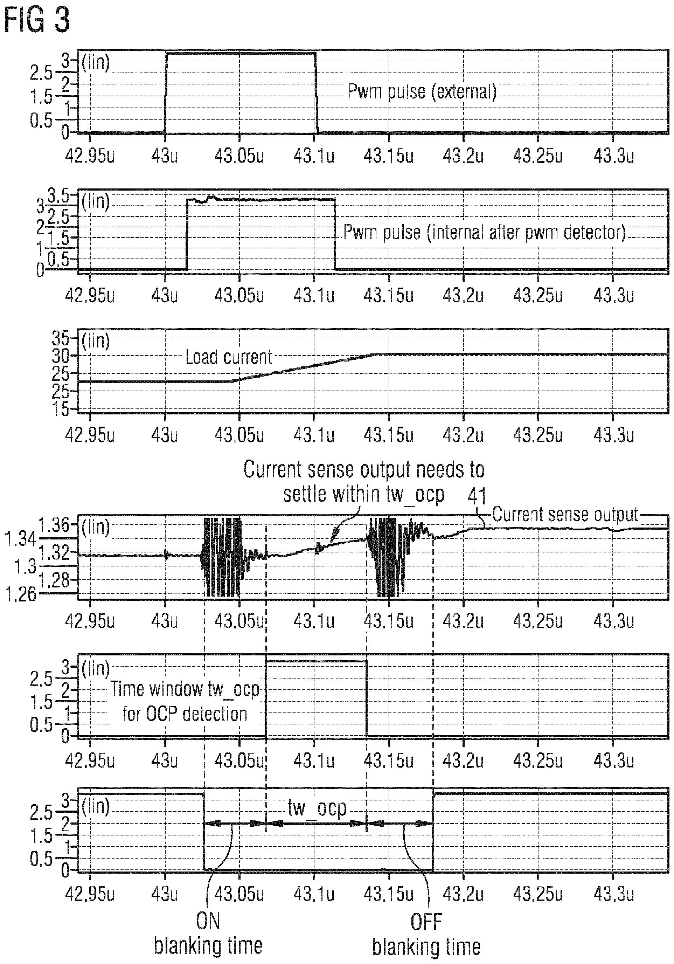

Fig. 3 shows other exemplary signal waveforms during the second mode of operation of the overcurrent protection circuit 3. In particular, Fig. 3 shows some problems which may occur during the second mode of operation of the overcurrent protection circuit 3 for short PWM pulses. Signal 41 is the IMON signal generated by the load current sensor which is used for over current detection. In order to enable a clean detection, the disturbances (shown as ringing in Fig. 3) due to turning Q1 on and turning Q2 off (and vice versa) must be blanked out by proper blanking times. Due to pwm pulse duration, the dead times and the blanking times, a certain time window tw_ocp is left over for over current detection. It can be clearly seen that the duration of this time window is depending on pwm pulse length, dead times and blanking times. As dead times and blanking times are given by the system resp. package and board parasitics, the pwm pulse length is the only degree of freedom to influence tw_ocp. If pwm pulse length becomes shorter, also tw_ocp time window becomes shorter. It can easily happen that tw_ocp becomes that short that a robust over current detection is no more possible by proper circuitry response in that short time. Additionally, the time window tw_ocp can completely disappear if pwm pulse length becomes even shorter. In reality the limit of pwm pulse length for proper over current protection may be in the range of 50ns. If the SMPS is driven by a switching frequency of e.g. 2MHz, then the resulting duty cycle is 50ns * 2MHz = 10% what is a realistic value. If the switching frequency becomes higher or the pwm pulse decreases further, the second mode of operation of the overcurrent protection circuit 3 illustrated in Fig. 3 does not work properly any more.

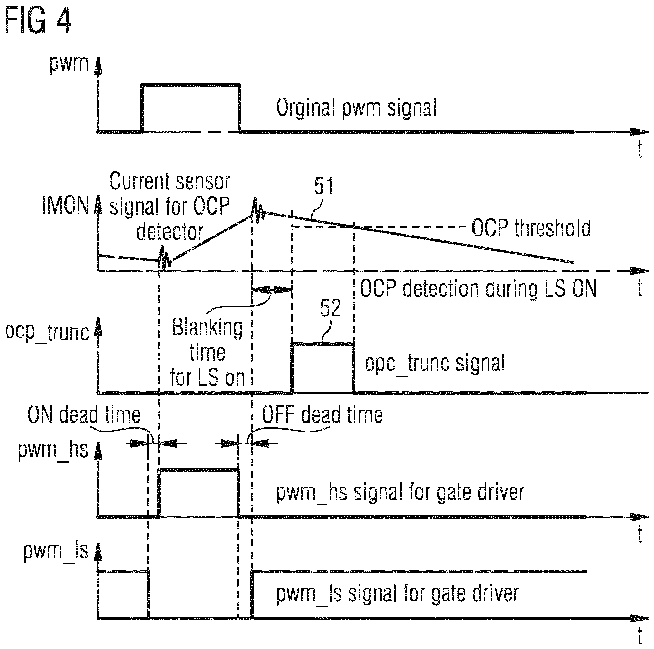

Fig. 4 shows exemplary signal waveforms during the first mode of operation of the overcurrent protection circuit 3. This first mode of operation may be in particular suitable for short pwm pulses. As already mentioned, current sensor 31 generates a signal IMON proportional to the actual flowing load current. For example, said load current may be only sensed in Q2 or in both switches Q1 and Q2 or emulated by dedicated circuitry. The signal IMON is typically used to provide a feedback to the controller and to derive a signal for load over current protection. Signal IMON is denoted as signal 51 in Fig. 4. Fig. 4 shows the idea behind the first mode of operation. The diagram is nearly the same as in Fig. 2 for the second mode of operation. However, the main difference is that the load over current detection window is now during the Q2 on phase. After a certain blanking time for circuitry settling in Q2 on phase (the blanking time can be e.g. 80ns - 100ns), a time window is opened for over current protection which is lasting for the full Q2 on time. If OCP level is hit, also ocp_trunc signal 52 is generated by a comparator in the same manner as in the second mode of operation described in context of Fig. 2, but now the detection window is much longer in time. If, for example, the SMPS switching frequency is even 3MHz, the duty cycle 10% and the Q2 on blanking time 80ns then about 300ns - 80ns = 220ns is left over for proper and robust OCP detection which is far enough for standard circuitries to detect an over current event. As the detection is happening in Q2 on phase pwm, truncation is no more possible. But as an energy transport limitation strategy the ocp_trunc signal can be used to either suppress the next pwm pulse to be propagated to the gate driver or to limit the next pwm pulse to the minimum pulse length. It must be mentioned that this first mode of operation is meant to be used for shorter pwm pulses (e.g. shorter than 50ns), for longer pwm pulses the second mode of operation can be applied. To distinguish if a pwm pulse is long enough or not a simple circuitry with a latch may be used. If the incoming pwm pulse is shorter than a certain time limit which may be generated in a circuitry as a one shot, then the latch is set and the OCP circuit may use this information to switch over to the described Q2 on window for OCP detection according to the first mode of operation. For the next incoming pwm pulse, a new time measurement of the pwm pulse is performed so that it can be avoided that ocp_trunc signal is activated two times for one switching cycle.

In summary, the main benefits of the first mode of operation is a much larger time window for over current detection and therefore a much more robust OCP detection even for very short pwm pulses. Additionally, it should be mentioned that the first mode of operation is easy to be implemented in circuity even for already exiting circuits for load over current protection. The presented concept for load over current protection for short pwm pulses can easily be implemented by state-of-the-art analog / mixed signal circuit blocks as current comparators, current mirrors, combinatorical logic, pass devices, analog (RC based) delay elements.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A method of detecting an overcurrent in a switched mode power supply comprising a high side switching element and a low side switching element, the method comprising:
- sensing, in a first mode of operation, during a first sensing time interval when the low side switching element is turned on, a first current indicative of a load current, and
- detecting an overcurrent condition if the first current exceeds a first threshold value.

2. The method according to claim 1, comprising:
- sensing, in a second mode of operation, during a second sensing time interval when the high side switching element is turned on, a second current indicative of the load current, and
- detecting an overcurrent condition if the second current exceeds a second threshold value.

3. The method according to any one of the preceding claims, comprising:
- receiving a pulse width modulation PWM signal for controlling the switching behavior of the high side switching element and the low side switching element, and
- switching between the first mode of operation and the second mode of operation based on the PWM signal.

4. The method according to claim 3, wherein the PWM signal comprises a control pulse for turning on the high side switching element, and wherein the method comprises
- switching between the first mode of operation and the second mode of operation based on a duration of the control pulse.

5. The method according to claim 3, wherein the PWM signal comprises a control pulse for turning on the high side switching element, and wherein the method comprises
- switching to the first mode of operation if a duration of the control pulse is shorter than a threshold duration, and
- switching to the second mode of operation if the duration of the control pulse is longer than the threshold duration.

6. The method according to claim 5, comprising
- generating a threshold pulse with a duration corresponding to the threshold duration,
- comparing the threshold pulse with the control pulse using a latch, and
- switching between the first mode of operation and the second mode of operation based on an output of the latch.

7. The method according to any one of the preceding claims, wherein the first sensing time interval begins after a first blanking time interval expires after the low side switching element is turned on.

8. The method according to any one of the preceding claims depending on claim 2, wherein the second sensing time interval begins after a second blanking time interval expires after the high side switching element is turned on.

9. The method according to claim 1, wherein the high side switching element and the low side switching element are connected in series between an input terminal and a reference potential.

10. The method according to any one of the preceding claims, wherein, during the first sensing time interval, the load current is flowing through the low side switching element.

11. The method according to any one of the preceding claims, wherein, during the first sensing time interval, the load current is flowing through the low side switching element via an inductive element to an output of the switched mode power supply.

12. The method according to any one of the preceding claims, wherein the load current is decreasing during the first sensing time interval.

13. The method according to claim 4, comprising:
- reducing, when the overcurrent condition is detected in the first mode of operation, a duration of a subsequent control pulse following the control pulse of the PWM signal, and
- applying the subsequent control pulse with reduced duration to a gate of the high side switching element.

14. The method according to any one of the preceding claims depending on claim 2, comprising
- turning off, when the overcurrent condition is detected in the second mode of operation, the high side switching element, and
- turning on, when the overcurrent condition is detected in the second mode of operation, the low side switching element.

15. A power stage comprising
- a high side switching element,
- a low side switching element, and
- an overcurrent protection circuit with a current sensor configured to sense, in a first mode of operation, during a first sensing time interval when the low side switching element is turned on, a first current indicative of a load current,
wherein the overcurrent protection circuit is configured to detect an overcurrent condition if the first current exceeds a first threshold value.
